# EUROPÄISCHE PATENTANMELDUNG

(11) **EP 2 169 292 A1**
(43) Veröffentlichungstag der Anmeldung: **31.03.2010**
(21) Anmeldenummer: 08017189.5
(22) Anmeldetag: 30.09.2008
(51) Int. Cl.: F16L 21/02, F16L 21/035, F01P 11/04, F02F 1/40, F16J 15/12

(54) **Steckstück**

(71) Anmelder: Carl Freudenberg KG, 69469 Weinheim (DE)
(72) Erfinder: Heldmann, Ralf, 69483 Wald-Michelbach (DE); Unger, Hans, 69518 Absteinach (DE)

(57) **Zusammenfassung**

Steckstück (1) zur Abdichtung einer Kanalstruktur (2) eines Verteilerblocks (3), umfassend eine Hülse (4) die zumindest außenseitig abschnittsweise von elastomerem Werkstoff umschlossen ist, wobei der elastomere Werkstoff die Hülse (4) an einer Stirnseite (5) unter Bildung einer Dichtkontur (6) in axialer Richtung überragt und der elastomere Werkstoff an der anderen Stirnseite (7) unter Bildung eines radial wirksamen Dichtrings (8) bündig mit der Hülse (4) abschließt.

## Beschreibung

### Technisches Gebiet

Die Erfindung betrifft ein Steckstück zur Abdichtung einer Kanalstruktur eines Verteilerblocks, umfassend eine Hülse die zumindest außenseitig abschnittsweise von elastomerem Werkstoff umschlossen ist.

### Stand der Technik

Derartige Steckstücke sind aus der DE 199 02 953 A1 bekannt. Das vorbekannte Steckstück dient der Verbindung zweier mit axialem Abstand zueinander benachbart angeordneten Hohlkörpern. Die miteinander zu verbindenden Hohlkörper können beispielsweise Leitungen zwischen Luftfilter und Turbolader eines Kraftfahrzeugs sein. Das bekannte Steckstück weist an beiden Stirnseiten einen kugelförmig gestalteten Dichtring auf, wobei der elastomere Werkstoff beidseitig die Stirnseite der Hülse überragt. Der Dichtring legt sich nach der Montage mit Vorspannung an die Innenseiten der zu verbindenden Leitungen an und bewirkt eine dichte Verbindung.

Verteilerblöcke, wie sie in Automatikgetrieben verwendet werden, bestehen meist aus mehreren Blöcken, die aus einem Gusswerkstoff hergestellt werden und in denen Kanalstrukturen, bestehend aus Kanälen und Bohrungen angeordnet sind. Da Blöcke aus Gusswerkstoffen häufig Lunker aufweisen, ist insbesondere eine dichte Anordnung von Bohrungen mit geschlossenen Wandungen schwierig.

### Darstellung der Erfindung

Der Erfindung liegt die Aufgabe zugrunde, ein Steckstück bereit zu stellen, welches eine sichere Abdichtung der Bohrungen gewährleistet.

Diese Aufgabe wird mit den Merkmalen von Anspruch 1 gelöst. Auf vorteilhafte Ausgestaltungen nehmen die Unteransprüche Bezug.

Zur Lösung der Aufgabe überragt der elastomere Werkstoff die Hülse an einer Stirnseite unter Bildung einer Dichtkontur in axialer Richtung und der elastomere Werkstoff schließt an der anderen Stirnseite unter Bildung eines radial wirksamen Dichtrings bündig mit der Hülse ab. Dabei bildet die freiliegende Stirnseite der Hülse, die dem Dichtring zugeordnet ist, eine Anpressfläche durch die die Hülse während der Montage in Richtung auf die Dichtkontur bewegt wird. Dabei liegt die Dichtkontur auf einem Plateau auf und wird durch die Hülse nach der Montage dichtend an das Plateau angepresst. Der Dichtring liegt wiederum im Bereich der Öffnung mit radialer Vorspannung an der Wand der Bohrung an. Somit ermöglicht das Steckstück eine Abdichtung der Bohrung, ohne dass die Wand der Bohrung durch umfangreiche Maßnahmen abgedichtet werden muss. Leckagestellen, die aus an die Bohrung angrenzende Lunker resultieren können, werden abgedichtet. Es ist auch denkbar, den Verteilerblock mehrfach zu teilen, wobei die Teilungsebene in dem zweiten Block so angeordnet ist, dass das Steckstück durch die Teilungsebene hindurch ragt. Bei dieser Ausgestaltung können zusätzliche Dichtungen, beispielsweise Flachdichtung an den an der Teilungsebene einander berührenden Stirnseiten, entfallen. Die durch die Teilung resultierende Undichtigkeit wird durch das Steckstück überbrückt. Das Steckstück ist einfach montierbar und ist aufgrund des einfachen Aufbaus auch kostengünstig herstellbar.

Der Dichtring kann kugelförmig ausgebildet sein. Derartige Dichtringe dichten auch bei Winkelversatz sicher, so dass eine Abdichtung in radialer Richtung stets gewährleistet ist. Des Weiteren ergibt durch die langsame Querschnittszunahme auch eine einfache Montage.

Die Dichtkontur kann als Dichtlippe ausgebildet sein. Die Dichtkontur ist vorteilhafterweise so ausgestaltet, dass der äußere Durchmesser der Dichtkontur dem Durchmesser der Hülse oder dem Durchmesser einer außenseitig angebrachten Beschichtung entspricht. Dadurch ist das Steckstück einfach montierbar. Die Dichtkontur überragt dabei die Stirnseite der Hülse derart, dass sie sich unter Einwirkung eines Innendrucks dichtend an die Wand der Bohrung anlegt. Dazu kann die Dichtkontur die Stirnseite der Hülse um etwa den halben Durchmesser der Hülse überragen.

Die Hülse kann im Bereich des Dichtrings verjüngt sein. Dadurch ergibt sich in diesem Bereich eine zusätzliche Verdickung aus elastomerem Material durch die sich die Dichtwirkung verbessert.

Die Hülse kann außenseitig mit einer Beschichtung versehen sein. Durch die Beschichtung ist die Hülse außenseitig abgedeckt und das Material der Hülse ist gegen äußere Einwirkungen, die beispielsweise das Material angreifen oder Korrosion verursachen könnten unempfindlich.

Der Dichtring, die Beschichtung und die Dichtkontur können materialeinheitlich und einstückig aus elastomerem Werkstoff gebildet sein. Dadurch vereinfacht sich die Fertigung, da die drei Bestandteile in einem Zug hergestellt werden können.

In einer erfindungsgemäßen Einbausituation ist ein Verteilerblock vorgesehen, umfassend einen ersten Block, der mit im Wesentlichen parallel zu seiner Stirnseite verlaufenden Kanälen versehen ist sowie einem zweiten Block, der mit einer Anzahl von Bohrungen versehen ist, wobei zwischen dem ersten Block und dem zweiten Block eine Flachdichtung angeordnet ist und wobei in den Bohrungen Steckstücke nach einem der vorherigen Ansprüche angeordnet sind. Beide Blöcke bestehen aus einem Gusswerkstoff, beispielsweise einem Aluminiumguss. Die Kanäle in dem ersten Block sind zu einer Stirnseite des ersten Blocks offen und münden in Bohrungen, die in dem zweiten Block angeordnet sind. Beide Blöcke werden beispielsweise durch eine Schraubverbindung fest miteinander verbunden. Zur Abdichtung der beiden Blöcke ist eine Flachdichtung aus elastomerem Werkstoff vorgesehen, die im Bereich der Bohrungen mit Ausnehmungen versehen ist, damit das in den Kanälen geführte Fluid in die Bohrungen eindringen kann. In den Bohrungen sind die erfindungsgemäßen Steckstücke angeordnet die verhindern, dass das Fluid in Lunker des zweiten Blockes eindringen kann. Die Stirnseite der Hülse, die bündig mit dem elastomeren Material abschließt, liegt an der Stirnseite des ersten Blockes an. Dadurch wird das Steckstück in der Bohrung verpresst und bewirkt eine sichere Abdichtung.

Die Bohrungen können einen Querschnittswechsel und ein dadurch gebildetes Plateau aufweisen. Auf dem Plateau liegt die Dichtkontur des Steckstücks, wobei die Dichtkontur nach der Montage an das Plateau angepresst wird und dichtend mit diesem abschließt. Das Plateau ist im Bereich des zweiten Durchtritts der Bohrung auf der dem ersten Block abgewandten Seite des zweiten Blocks angeordnet. In diesem Bereich sind keine Lunker zu erwarten, da diese vorwiegend im mittleren Bereich des Blocks anzutreffen sind. Daher ist in diesem Bereich keine Undichtigkeit durch Lunker mehr zu erwarten.

In der Flachdichtung können zumindest im Bereich der Steckstücke Ausnehmungen vorgesehen sein. Die Ausnehmungen sind dabei so ausgebildet, dass um das Steckstück ein Freiraum verbleibt, so dass gewährleistet ist, dass die Hülse des Steckstücks zur Anlage an den ersten Block gelangt.

### Kurzbeschreibung der Zeichnung

Einige Ausführungsbeispiele des erfindungsgemäßen Steckstücks werden nachfolgend anhand der Figuren näher erläutert. Diese zeigen, jeweils schematisch:
Fig. 1 das Steckstück im Schnitt;
Fig. 2 ein Verteilerblock mit Steckstück im Schnitt.

### Ausführung der Erfindung

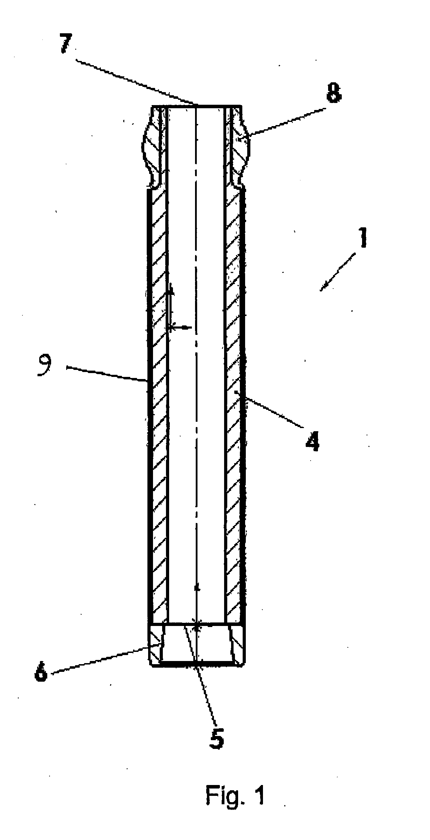

Figur 1 zeigt ein Steckstück 1 zur Abdichtung einer Kanalstruktur 2 eines Verteilerblocks 3, umfassend eine Hülse 4 aus metallischem Werkstoff, die außenseitig vollflächig von elastomerem Werkstoff umschlossen ist. Dabei überragt der elastomere Werkstoff die Hülse 4 an einer Stirnseite 5 unter Bildung einer Dichtkontur 6 in axialer Richtung, wobei die Dichtkontur 6 als Dichtlippe ausgebildet ist, die unter Einwirkung von Druck in radialer Richtung beweglich ist. An der anderen Stirnseite 7 schließt der elastomere Werkstoff unter Bildung eines radial wirksamen Dichtrings 8 bündig mit der Hülse 4 ab. An dieser Stirnseite 7 liegt die Hülse 4 demnach frei. Der Dichtring 8 weist eine kugelförmige Außenkontur auf und die Hülse 4 ist im Bereich des Dichtrings 8 verjüngt. Zwischen Dichtring 8 und Dichtkontur 6 ist eine Beschichtung 9 vorgesehen, so dass die Hülse 4 außenseitig vollständig mit elastomerem Werkstoff umgeben ist. Der Dichtring 8, die Beschichtung 9 und die Dichtkontur bestehen dabei aus demselben elastomeren Werkstoff und sind materialeinheitlich und einstückig in einem Arbeitsgang hergestellt.

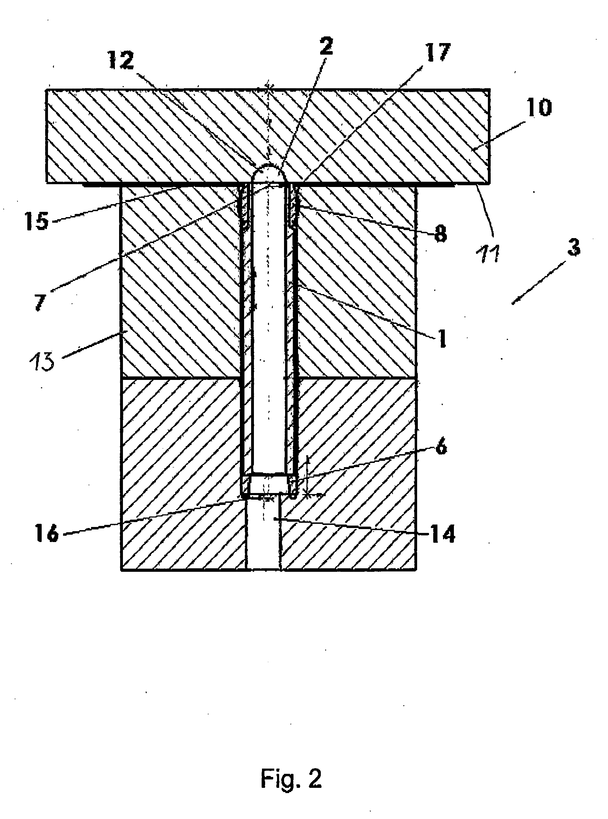

Figur 2 zeigt einen Verteilerblock 3 eines Automatikgetriebes eines Kraftfahrzeugs, umfassend einen ersten Block 10, der mit im Wesentlichen parallel zu seiner Stirnseite 11 verlaufenden Kanälen 12 versehen ist sowie einem zweiten Block 13, der mit einer Anzahl von Bohrungen 14 versehen ist. Zwischen dem ersten Block 10 und dem zweiten Block 13 ist eine Flachdichtung 15 aus elastomerem Werkstoff angeordnet, die den ersten Block 10 und den zweiten Block 13 fluiddicht miteinander verbindet. Der zweite Block 13 ist geteilt und somit mehrteilig ausgebildet. Das Steckstück 1 ragt dabei durch die Teilungsebene hindurch und dichtet den Durchgang der Bohrung 14 gegenüber den beiden Teilen des zweiten Blocks 13 ab. In der Flachdichtung 15 sind im Bereich der Verbindungen zwischen den Kanälen 12 und den Bohrungen 14 Ausnehmungen 17 vorgesehen, wodurch die Flachdichtung 15 beabstandet zu dem Steckstück 1 ist. In jeder der Bohrungen 14 ist ein Steckstück 1 gemäß Figur 1 angeordnet. Dabei liegt die Dichtkontur 6 auf einem Plateau 16 welches durch einen Querschnittswechsel in der Bohrung 14 hergestellt ist.

## Patentansprüche

1. Steckstück (1) zur Abdichtung einer Kanalstruktur (2) eines Verteilerblocks (3), umfassend eine Hülse (4) die zumindest außenseitig abschnittsweise von elastomerem Werkstoff umschlossen ist, **dadurch gekennzeichnet, dass** der elastomere Werkstoff die Hülse (4) an einer Stirnseite (5) unter Bildung einer Dichtkontur (6) in axialer Richtung überragt und der elastomere Werkstoff an der anderen Stirnseite (7) unter Bildung eines radial wirksamen Dichtrings (8) bündig mit der Hülse (4) abschließt.

2. Steckstück nach Anspruch 1, **dadurch gekennzeichnet, dass** der Dichtring (8) kugelförmig ausgebildet ist.

3. Steckstück nach Anspruch 1 oder 2, **dadurch gekennzeichnet, dass** die Dichtkontur (6) als Dichtlippe ausgebildet ist.

4. Steckstück nach einem der Ansprüche 1 bis 3, **dadurch gekennzeichnet, dass** die Hülse (4) im Bereich des Dichtrings (8) verjüngt ist.

5. Steckstück nach einem der Ansprüche 1 bis 4, **dadurch gekennzeichnet, dass** die Hülse (4) außenseitig mit einer Beschichtung (9) versehen ist.

6. Steckstück nach Anspruch 5, **dadurch gekennzeichnet, dass** der Dichtring (8), die Beschichtung (9) und die Dichtkontur (6) materialeinheitlich und einstückig aus elastomerem Werkstoff gebildet sind.

7. Verteilerblock (3), umfassend einen ersten Block (10), der mit im Wesentlichen parallel zu seiner Stirnseite (11) verlaufenden Kanälen (12) versehen ist sowie einem zweiten Block (13), der mit einer Anzahl von Bohrungen (14) versehen ist, wobei zwischen dem ersten Block (10) und dem zweiten Block (13) eine Flachdichtung (15) angeordnet ist und wobei in den Bohrungen (14) Steckstücke (1) nach einem der vorherigen Ansprüche angeordnet sind.

8. Verteilerblock nach Anspruch 7, **dadurch gekennzeichnet, dass** die Bohrungen (14) einen Querschnittswechsel und ein **dadurch** gebildetes Plateau (16) aufweisen.

9. Verteilerblock nach Anspruch 7 oder 8, **dadurch gekennzeichnet, dass** in der Flachdichtung (15) zumindest im Bereich der Steckstücke (1) Ausnehmungen (17) vorgesehen sind.

## Geänderte Patentansprüche

### Geänderte Patentansprüche gemäss Regel 137(2) EPÜ.

**1.** Steckstück (1) zur Abdichtung einer Kanalstruktur (2) eines Verteilerblocks (3), umfassend eine Hülse (4) die zumindest außenseitig abschnittsweise von elastomerem Werkstoff umschlossen ist, wobei der elastomere Werkstoff die Hülse (4) an einer Stirnseite (5) unter Bildung einer Dichtkontur (6) in axialer Richtung überragt und der elastomere Werkstoff an der anderen Stirnseite (7) unter Bildung eines radial wirksamen Dichtrings (8) bündig mit der Hülse (4) abschließt, **dadurch gekennzeichnet, dass** die Dichtkontur (6) als Dichtlippe ausgebildet ist und der äußere Durchmesser der Dichtkontur (6) dem Durchmesse der Hülse (4) oder dem Durchmesser einer außenseitig angebrachten Beschichtung (9) entspricht.

**2.** Steckstück nach Anspruch 1, **dadurch gekennzeichnet, dass** der Dichtring (8) kugelförmig ausgebildet ist.

**3.** Steckstück nach Anspruch 1 oder 2, **dadurch gekennzeichnet, dass** die Hülse (4) im Bereich des Dichtrings (8) verjüngt ist.

**4.** Steckstück nach einem der Ansprüche 1 bis 3, **dadurch gekennzeichnet, dass** die Hülse (4) außenseitig mit einer Beschichtung (9) versehen ist.

**5.** Steckstück nach Anspruch 4, **dadurch gekennzeichnet, dass** der Dichtring (8), die Beschichtung (9) und die Dichtkontur (6) materialeinheitlich und einstückig aus elastomerem Werkstoff gebildet sind.

**6.** Verteilerblock (3), umfassend einen ersten Block (10), der mit im Wesentlichen parallel zu seiner Stirnseite (11) verlaufenden Kanälen (12) versehen ist sowie einem zweiten Block (13), der mit einer Anzahl von Bohrungen (14) versehen ist, wobei zwischen dem ersten Block (10) und dem zweiten Block (13) eine Flachdichtung (15) angeordnet ist und wobei in den Bohrungen (14) Steckstücke (1) nach einem der vorherigen Ansprüche angeordnet sind.

**7.** Verteilerblock nach Anspruch 6, **dadurch gekennzeichnet, dass** die Bohrungen (14) einen Querschnittswechsel und ein **dadurch** gebildetes Plateau (16) aufweisen.

**8.** Verteilerblock nach Anspruch 6 oder 7, **dadurch gekennzeichnet, dass** in der Flachdichtung (15) zumindest im Bereich der Steckstücke (1) Ausnehmungen (17) vorgesehen sind.
